# EUROPÄISCHE PATENTANMELDUNG

(11) **EP 1 796 028 A2**
(43) Veröffentlichungstag der Anmeldung: **13.06.2007**
(21) Anmeldenummer: 06121177.7
(22) Anmeldetag: 25.09.2006
(51) Int. Cl.: G06Q 10/00, H04L 12/58

(54) **Verfahren zum Verbindungsaufbau in Kommunikationsnetzen**

(30) Priorität: 06.12.2005 AT 19552005
(71) Anmelder: Siemens Aktiengesellschaft Österreich, 1210 Wien (AT)
(72) Erfinder: Otto, Manfred, 1040 Wien (AT); Böhm, Peter, 2732 Willendorf (AT); Kemminger, Karl, 1200 Wien (AT)

(57) **Zusammenfassung**

Die Erfindung betrifft ein Verfahren zum Verbindungsaufbau in Kommunikationsnetzen, bei dem die Versender(REQ) von Nachrichten mittels Adress - Auskunftsystemen (MOAIS) potentielle Adressaten ermitteln, dadurch gekennzeichnet, dass in den Adress -Auskunftsystemen (MOAIS) jedem potentiellen Adressaten (AO) ein individuelles Filter zugeordnet wird, und dass bei einer Anfrage eines Versenders (REQ) nur die Adressen jener potentiellen Adressaten (AO) bekannt gegeben werden, deren individuelles Filter den Empfang der entsprechenden Nachrichten zulässt.

Damit kann der Empfang von Spam-Mails oder unerwünschten SMS oder MMS verhindert werden.

## Beschreibung

### Technisches Gebiet

Die Erfindung betrifft ein Verfahren zum Verbindungsaufbau in Kommunikationsnetzen, bei dem die Versender von Nachrichten mittels Adress - Auskunftssystemen potentielle Adressaten ermitteln.

### Stand der Technik

Die außerordentliche Leistungsfähigkeit zeitgemäßer elektronischer Kommunikationsnetze hat dazu geführt, dass sich ihre Dienste wie beispielsweise die elektronische Post (englisch: electronic mail, abgekürzt Email oder einfach nur mail) steigender Beliebtheit erfreuen.

Als Email wird in Computernetzwerken jener Dienst bezeichnet, über den die Netzwerkteilnehmer miteinander schriftlich kommunizieren können. Jeder Benutzer hat dabei seinen eigenen Briefkasten, in dem Nachrichten abgelegt werden können.

In die schriftlichen Nachrichten können entweder als Anlage oder auch direkt Dateien beliebigen Inhalts (Bilddateien, ablauffähige Programme etc.) integriert werden.

Die Vorteile des Mediums haben allerdings auch dazu geführt, dass es für den unverlangten massenhaften Versand von Nachrichten, die sogenannten "Spam-Mails" verwendet wird, welche inzwischen einen wesentlichen Anteil des gesamten Datenaufkommens ausmachen. Die Bezeichnung "Spam" bezog sich ursprünglich auf das Überfluten von Newsgroups im Usenet mit Werbebotschaften und wurde später auf E-Mails übertragen.

Durch Spam-Mails entstehen nicht nur beträchtliche Kosten, sondern es ist dadurch das System E-Mail als Kommunikationsmittel insgesamt bedroht. Spam-Mails können durch Überlastung mittlerweile ganze Mailserver lahm legen. Das Aussortieren und Lesen von Spam erfordert überdies von den Empfängern einen gewissen Aufwand, der wiederum mit Kosten verbunden ist.

Als Lösung für dieses Problem sind Spamfilter bekannt, welche derartige Emails automatisch aussortieren. Sie arbeiten in aller Regel allerdings nicht zuverlässig, daher entstehen zudem Schäden durch fälschlich blockierte Nachrichten.

### Darstellung der Erfindung

Der Erfindung liegt daher die Aufgabe zugrunde, ein Verfahren anzugeben, mit dem der Empfang von Emails wirkungsvoll eingeschränkt werden kann.

Erfindungsgemäß geschieht dies mit einem Verfahren der eingangs genannten Art, bei dem in den Adress-Auskunftssystemen jedem potentiellen Adressaten ein individuelles Filter zugeordnet wird, und bei dem bei einer Anfrage eines Versenders nur die Adressen jener potentiellen Adressaten bekannt gegeben werden, deren individuelles Filter den Empfang der entsprechenden Nachrichten zulässt.

Nach der Erfindung werden Email-Adressen oder andere Adressen wie Telefonnummern, bei denen grundsätzlich dieselbe Problematik besteht, durch Adress-Auskunftssystemen verwaltet, die diese Adressen nur in begrenztem Umfang anhand vorgebbarer Kriterien weitergeben.
Damit wird die Zusendung unerwünschter Spam-Mails in einem Computernetz oder von SMS in einem Telefonnetz wirkungsvoll unterbunden und die damit verbundenen Nachteile vermieden.

Vorteilhaft ist es, wenn die Adressen nur verschlüsselt weitergegeben werden und das Versenden der Nachricht an den Adressaten in der Weise erfolgt, dass die Anonymität des Adressaten gegenüber dem Versender gewahrt bleibt.

Günstig ist es weiterhin, wenn die Verschlüsselung der Adressen in der Weise erfolgt, dass ein Versender auf der Basis eines erhaltenen Schlüssels entweder eine vorbestimmte Anzahl von Nachrichten oder eine beliebige Zahl von Nachrichten während einem vorgegebenen Zeitraum an den jeweiligen Adressaten senden kann.

Die ist besonders günstig in Fällen, in denen sich ein Nutzer nur vorübergehend für bestimmte Themen interessiert, wie es beispielsweise beim Erwerb eines Fahrzeuges oder sonstigen Gebrauchsgegenstandes der Fall sein wird. Hier kann der Benutzer für einen bestimmten Zeitraum die per Email versandten Angebote von Fahrzeughändlern empfangen. Nach erfolgtem Kauf, wenn damit sein Interesse an den entsprechenden Angeboten erloschen ist, werden auch keine Emails zu diesem Thema mehr zugestellt.

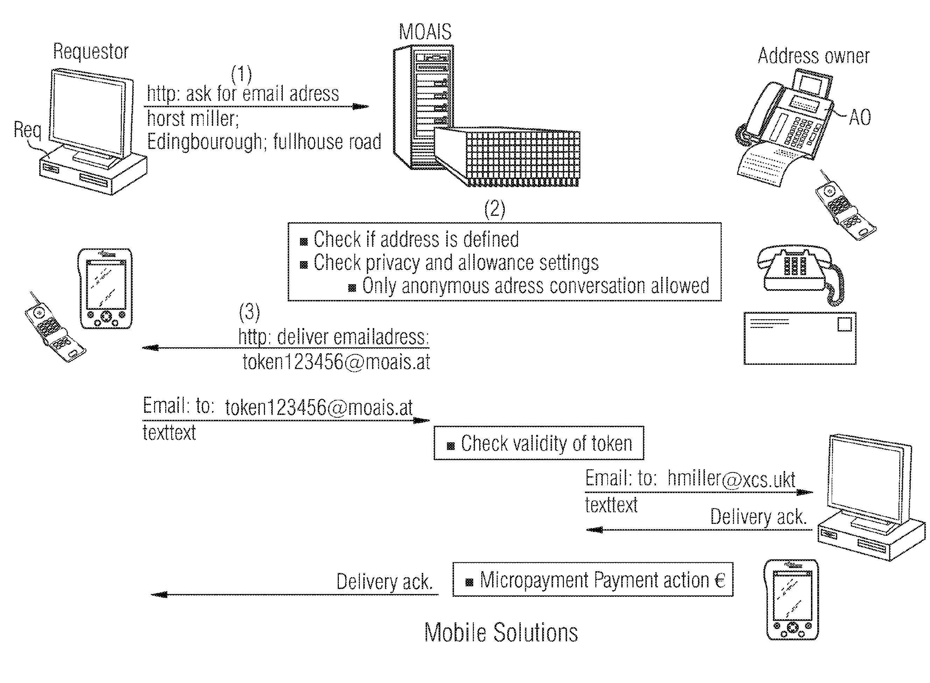

### Kurzbeschreibung der Zeichnung

Die Erfindung wird anhand einer Figur näher erläutert, welche beispielhaft den Ablauf eines erfindungsgemäßen Verfahrens zum Verbindungsaufbau in einem Kommunikationsnetz zeigt.

### Ausführung der Erfindung

Das in der Figur dargestellte Kommunikationsnetz umfasst einen Anbieter REQ, ein Adress-Auskunftssystem MOAIS, sowie potentielle Adressaten AO, welche über verschiedene Kommunikationsmittel wie beispielsweise Personalcomputer, drahtgebundene Telefonendgeräte, Mobiltelefone oder Personal Digital Assistants PDA verfügen. Jedem der potentiellen Adressaten ist im Adress-Auskunftssystem MOAIS ein individuelles Filter zugeordnet, welches der Adressat in einer Initialisierungsphase festgelegt hat. Diese Initialisierungphase wird beim erstmaligen Einsatz des jeweiligen Kommunikationsgerätes stattfinden und kann bei Bedarf wiederholt werden, wenn also die Kriterien für den Empfang von Nachrichten geändert werden sollen.

Diese Kriterien können beispielsweise beinhalten:
- bestimmte Anbieter REQ
- Themenkreise
- zeitliche Vorgaben
- Zahl der Nachrichten

Es ist dabei auch möglich, die Kriterien miteinander zu verknüpfen, also beispielsweise den Empfang auf eine vorgegebene Anzahl von Nachrichten eines bestimmten Anbieters REQ einzuschränken, oder aber auch auf Nachrichten bestimmter Anbieter REQ zu bestimmten Themen.

Ein Anbieter REQ, der nun Nachrichten versenden möchte, muss sich nun in einem ersten Schritt (1) an das Adress-Auskunftssystem MOAIS wenden, um von diesem entsprechende Adressinformationen zu erhalten. Dabei wird es sich um die E-mail-Adressen der Teilnehmer AO an einem Computernetzwerk und/oder um Teilnehmernummern von Telefonendgeräten handeln. Diese können mit akustischen Meldungen oder aber per SMS oder MMS erreicht werden.

Auf diese Anfrage eines Anbieters/Versenders REQ werden in einem zweiten Schritt (2) vom Adress-Auskunftssystem MOAIS jene potentiellen Adressaten AO ermittelt, deren individuelles Filter den Empfang entsprechender Nachrichten zulässt.

Diese Adressen werden dem Anbieter/Versender REQ in einem dritten Schritt (3) bekannt gegeben, der in einem vierten Schritt (4) seine Nachricht an die Adressaten AO versendet.

Dabei ist es auch denkbar, dass der Anbieter/Versender REQ gezielt nach bestimmten Personen sucht, die beispielsweise in seiner Kundenkartei enthalten sind.

Vom Adress-Auskunftssystem MOAIS wird dann überprüft, ob diese Personen als Teilnehmer registriert sind und ob diese Personen dem Empfang derartiger Nachrichten auch zugestimmt haben.

Ist dies der Fall, dann wird die Adresse dem Anbieter/Versender REQ bekannt gegeben. Diese Bekanntgabe kann verschlüsselt erfolgen.

Der Schlüssel kann eine begrenzte Gültigkeit aufweisen, sodass lediglich eine vorgegebene Zahl von Nachrichten auf diese Adresse versendet werden kann, oder die Gültigkeit nach einem vorgegebenen Zeitraum erlischt.

Die Erfindung ist besonders vorteilhaft in Computernetzen zur Steuerung des Email-Empfanges einsetzbar, kann aber in gleicher Weise in Kommunikationsnetzen mit ähnlicher Problematik angewendet werden.

## Patentansprüche

1. Verfahren zum Verbindungsaufbau in Kommunikationsnetzen, bei dem die Versender von Nachrichten mittels Adress - Auskunftsystemen (MOAIS) potentielle Adressaten ermitteln, **dadurch gekennzeichnet, dass** in den Adress -Auskunftsystemen (MOAIS) jedem potentiellen Adressaten ein individuelles Filter zugeordnet wird, und dass bei einer Anfrage eines Versenders (REQ) nur die Adressen jener potentiellen Adressaten (AO) bekannt gegeben werden, deren individuelles Filter den Empfang der entsprechenden Nachrichten zulässt.

2. Verfahren nach Anspruch 1, **dadurch gekennzeichnet, dass** die Adressen nur verschlüsselt weitergegeben werden und das Versenden der Nachricht an den Adressaten (AO) in der Weise erfolgt, dass die Anonymität des Adressaten (AO) gegenüber dem Versender (REQ) gewahrt bleibt.

3. Verfahren nach Anspruch 2, **dadurch gekennzeichnet, dass** die Verschlüsselung der Adressen in der Weise erfolgt, dass ein Versender (REQ) auf der Basis eines erhaltenen Schlüssels eine vorbestimmte Anzahl von Nachrichten an den jeweiligen Adressaten (AO) senden kann.

4. Verfahren nach Anspruch 2, **dadurch gekennzeichnet, dass** die Verschlüsselung der Adressen in der Weise erfolgt, dass ein Versender (REQ) auf der Basis eines erhaltenen Schlüssels während einem vorgegebenen Zeitraum Nachrichten an den jeweiligen Adressaten (AO) senden kann.
